(19) **Europäisches Patentamt**
**European Patent Office**
**Office européen des brevets**

(11) **EP 3 482 974 B1**

(12) **EUROPEAN PATENT SPECIFICATION**

(45) Date of publication and mention
of the grant of the patent:
**05.05.2021 Bulletin 2021/18**

(51) Int Cl.:
***B60C 9/02*** *(2006.01)*

(21) Application number: **18198212.5**

(22) Date of filing: **02.10.2018**

(54) **PNEUMATIC TIRE AND METHOD FOR MANUFACTURING THE SAME**

LUFTREIFEN UND VERFAHREN ZUR HERSTELLUNG DAVON

PNEU ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.11.2017 JP 2017216523**

(43) Date of publication of application:
**15.05.2019 Bulletin 2019/20**

(73) Proprietor: **SUMITOMO RUBBER INDUSTRIES,
LTD.**
**Kobe-shi,**
**Hyogo-ken 651-0072 (JP)**

(72) Inventors:
• **TOMITA, Shintaro**
 **Kobe-shi, Hyogo 651-0072 (JP)**
• **ASANO, Kazuo**
 **Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A2- 0 298 673     JP-A- S62 128 804**
**JP-A- 2007 106 174     US-A1- 2004 065 397**

**Description**

BACKGROUND ART

Field of the Disclosure

The present disclosure relates to pneumatic tires and method for manufacturing the same, and more particularly to a pneumatic tire having an improved carcass profile capable of improving steering stability while suppressing increase in mass.

Description of the Related Art

Generally, tire vulcanization molds have been designed to have clip widths which are greater than rim widths of standard rims on which the molded tires to be mounted. This is because when the tires are vulcanized by vulcanization molds having narrower clip widths than rim widths of standard rims, bead portions of the tires are subject to compressive strain upon being mounted on the standard rims, resulting in deterioration in durability of the bead portions as well as in rim assembling property (air-in performance).

On the other hand, it has also been required to design pneumatic tires so as to have carcass profiles in natural equilibrium shapes upon being inflated with the standard pressure. Under the inflated condition, such carcasses having natural equilibrium shapes are subject to uniform tension which brings less tire deformation.

However, when a tire vulcanization mold is designed based on a natural equilibrium shape, since a clip width of the tire vulcanization mold becomes the same as the rim width of the standard rim, the tire molded by the tire vulcanization mold tends to have bad influence on bead durability as well as rim assembling property.

Conventionally, tire vulcanization molds have been designed such that carcass profiles have natural equilibrium shapes at a situation where the clip widths are wider than the standard rim widths. Unfortunately, when the tires molded by the above tire vulcanization molds are mounted on the standard rims with standard pressure, the carcass profiles tend to be off natural equilibrium shapes. As a result, the carcasses receive non-uniform tension which leads to reduction in rigidity of the tire, especially, lateral rigidity, deteriorating steering stability. In order to make up for the above defects, although it may be considered thickening sidewall rubbers and adding reinforcing plies, for example. These, however, may cause increase in mass, and thus deteriorating rolling resistance.

Note that the following Patent document 1 discloses a technique to improve a carcass profile.

Patent document

[Patent document 1] Japanese Unexamined Patent Application Publication 2017-121875

Document EP 0 298 673 A2 discloses a pneumatic tire comprising a carcass that comprises at least one carcass ply of cords extending between bead cores of bead portions through a tread portion and sidewall portions, wherein both ends of the carcass ply are turned up around the respective bead cores; and a pair of bead apex rubbers each extending radially outwardly to a radially outer end from a radially inner surface that is connected to the respective bead cores. Related pneumatic tires are known from documents US 2004/065397 A1, JP S62 128804 A and JP 2007 106174 A.

SUMMARY OF THE DISCLOSURE

In view of the above problems in the conventional art, the present disclosure has an object to provide a pneumatic tire having an improved carcass profile capable of improving steering stability while suppressing increase in mass, and a method for manufacturing the same. This object is solved by a pneumatic tire having the features of claim 1 and a method for manufacturing the same having the features of claim 4.

According to the invention, a pneumatic tire includes a carcass includes at least one carcass ply of cords extending between bead cores of bead portions through a tread portion and sidewall portions, wherein both ends of the carcass ply are turned up around the respective bead cores, and a pair of bead apex rubbers each extending radially outwardly to a radially outer end from a radially inner surface that is connected to the respective bead cores. In a tire meridian cross-section under a standard inflated state in which the tire is mounted on a standard rim and inflated to a standard pressure, in each of the bead portions, an angle of a bead reference line that passes an axially center point of the inner surface of the bead apex rubber and the radially outer end of the bead apex rubber is in a range of from 28 to 35 degrees with respect to a tire radial line. In a tire meridian cross-section under the standard inflated state, in each of the bead portions, a ratio h/H of a carcass maximum-width height (h [mm]) from a bead base line to a carcass maximum height (H[mm]) from the bead base line satisfies the following formula (1):

$$(- 3.0 \times 10^{-4} \times W + 0.5863) < = (h / H) < = (- 4.0 \times 10^{-4} \times W + 0.6520) \text{ --- (1)},$$

where "W" represents a tire nominal width (unit: mm).

In another aspect of the first disclosure, in a tire meridian cross-section under the standard inflated state, in each of the bead portions, when the bead apex rubber is divided into an axially inner region and an axially outer region by the bead reference line, a ratio Si/So of an area Si of the inner region to an area So of the outer region may be in a range of from 1.5 to 3.0.

In another aspect of the first disclosure, in a tire meridian cross-section under the standard inflated state, a tread radius (R) that passes a first point of a tread profile on the tire equatorial plane and two second points of the tread profile which are located from tire equatorial plane to axially both sides at a distance of 60% of a tread half width may satisfy the following formula (2):

$$(4.43 \times W - 386.7) < = R < = (4.43 \times W - 155.7) \text{ --- (2)},$$

where "W" represents a tire nominal width.

According to one aspect of the second disclosure, a method for manufacturing the above-mentioned pneumatic tire, the method includes designing a first tire profile having a carcass profile in a natural equilibrium shape when a bead width of the bead portions is kept in a standard rim width, designing a second tire profile by enlarging the bead width of the first tire profile greater than the standard rim width such that the second tire profile has a carcass profile deformed so as to have a lower maximum width position than that of the carcass profile of first tire profile, designing a tire molding cavity of a tire vulcanization mold based on the second tire profile, and vulcanizing a green tire using the tire vulcanization mold.

In another aspect of the second disclosure, in a tire meridian cross-section of the second tire profile, each of the bead portions of the second tire profile may be designed such that the angle of the bead reference line is inclined at an angle in a range of from 28 to 35 degrees with respect to the tire radial line.

In another aspect of the second disclosure, in a tire meridian cross-section of the second tire profile, each of the bead portions of the second tire profile may be designed such that a ratio h2/H2 of a carcass maximum-width height (h2) from the bead base line to a carcass maximum height (H2) from the bead base line is in a range of from 0.39 to 0.48.

As used herein, the standard wheel rim is a wheel rim officially approved for each tire by standards organizations on which the tire is based, wherein the standard wheel rim is the "standard rim" specified in JATMA, the "Design Rim" in TRA, and the "Measuring Rim" in ETRTO, for example.

As used herein, the standard pressure is a standard pressure officially approved for each tire by standards organizations on which the tire is based, wherein the standard pressure is the "maximum air pressure" in JATMA, the maximum pressure given in the "Tire Load Limits at Various Cold Inflation Pressures" table in TRA, and the "Inflation Pressure" in ETRTO, for example. In case of passenger car tires, however, the standard pressure is defined as 180 kPa.

BRIEF DESCRIPTION OF THE DRAWINGS

FIG. 1 is a cross-sectional view of a pneumatic tire under a standard inflated state according to an embodiment of the disclosure;
FIG. 2 is an enlarged view of a bead portion of FIG. 1;
FIGS. 3A and 3B are cross-sectional views of a first tire profile and a second tire profile, respectively;
FIG. 4 is an enlarged view of a bead portion of the second tire profile;
FIG. 5 is a cross-sectional view of a tire vulcanization mold designed based on the second tire profile;
FIG. 6 is a graph showing the relationship between ratios h/H and tire nominal widths; and
FIG. 7 is a graph showing the relationship between tread radii and tire nominal widths.

DESCRIPTION OF THE PREFERRED EMBODIMENTS

An embodiment of the present disclosure will be explained below with reference to the accompanying drawings.

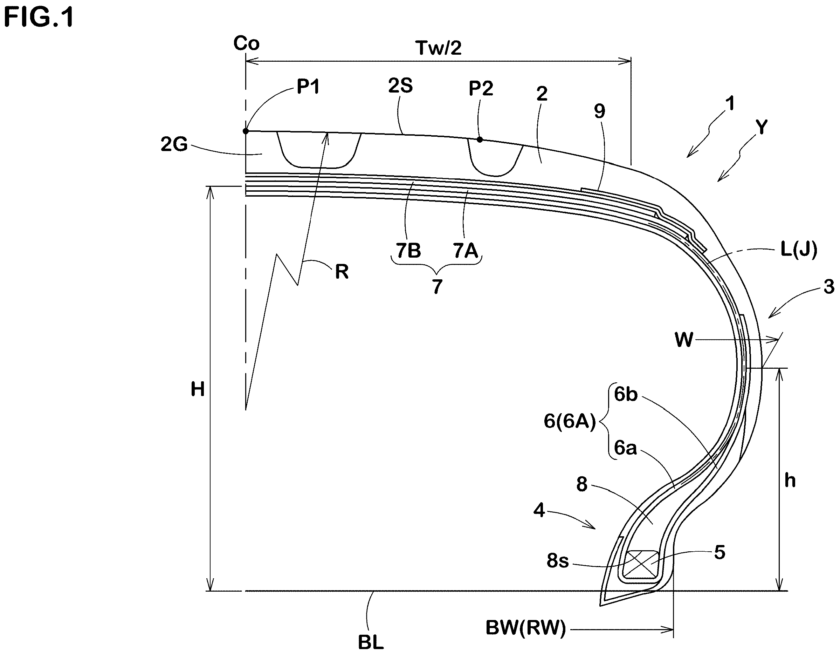

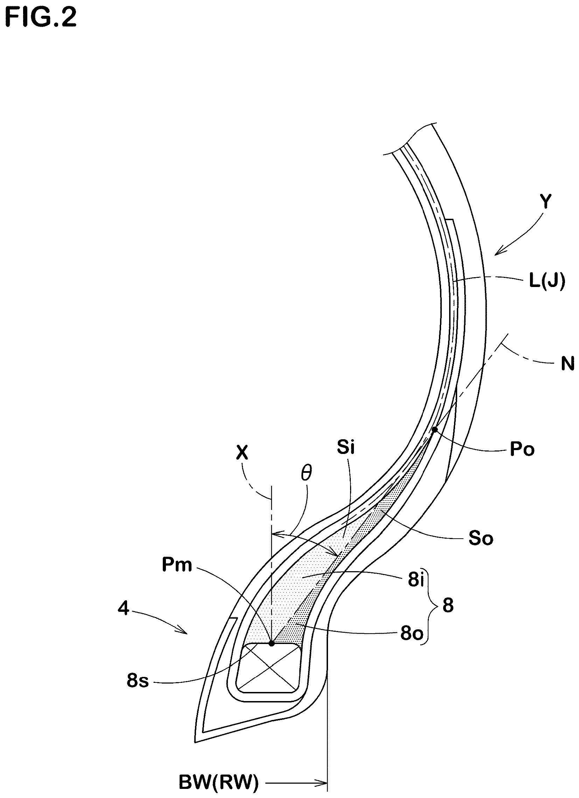

FIGS. 1 and 2 illustrate cross-sectional views of a pneumatic tire 1 under the standard inflated state Y. For convenience sake, the standard rim is not illustrated in FIGS. 1 and 2.

As illustrated in FIG. 1, the pneumatic tire 1 according to the embodiment includes a tread portion 2, a pair of sidewall portions 3, a pair of bead portions 4 each having a bead core 5 therein, a carcass 6 extending between the pair of bead portions 4 through the tread portion 2 and the pair of sidewall portions 3, and a pair of bead apex rubbers 8 disposed in the pair of bead portions 4.

The carcass 6 includes at least one carcass ply 6A, e.g., one ply in the embodiment, of carcass cords which are oriented at angles of from 75 to 90 degrees with respect to the tire circumferential direction. The carcass ply 6A includes a ply main portion 6a extending between the bead cores 5, and a pair of ply turn-up portions 6b each turned up around the respective bead cores 5 from the axially inside to the outside of the tire.

A belt layer 7 for reinforcing the tread portion 2 is disposed on the carcass 6.

The belt layer 7 includes at least two belt plies 7A and 7B of belt cords which are oriented at angles of from 10 to 35 degrees with respect to the tire circumferential direction, for example. In this embodiment, two belt plies 7A are employed for the belt layer 7. The belt ply 7A is arranged such that the belt cords thereof cross the belt cords of the belt ply 7B. In this embodiment, a band layer 9 is further provided on radially outwardly of the belt layer 7 in order to improve high-speed driving performance. The band layer 9 includes one or more spirally wound band cords in the tire circumferential direction. As the band layer 9, a pair of edge band plies which cover axially both end portions of the belt layer 7, and/or a full band ply which covers a substantially entire width of the belt layer 7 may be employed. In this embodiment, a pair of edge band plies and a full band ply are employed for the band layer 9.

As the carcass cords, belt cords and band cords, they are not particularly limited but can be employed various conventional tire cords.

Each of the bead apex rubbers 8 extends radially outwardly from a radially inner surface 8s that is connected to the bead core 5 through between the ply main portion 6a and the ply turn-up portion 6b.

As illustrated in FIG. 2, in the tire meridian cross-section under the standard inflated state Y, in each of the bead portions 4, an angle θ of a bead reference line N is in a range of from 28 to 35 degrees with respect to the tire radial line X. As used herein, the bead reference line N is a straight line that passes an axially center point Pm of the inner surface 8s of the bead apex rubber 8 and the radially outer end Po of the bead apex rubber 8.

As being described in the second disclosure regarding a tire manufacturing method which will be explained, it is important to set the angle θ for the above ranges of from 28 to 35 degrees to manufacture the pneumatic tire 1 that has a carcass profile L in a natural equilibrium shape J under the standard inflated state Y using a tire vulcanization mold that has a clip width CW wider than the standard rim width RW. When the angle θ is outside the above-mentioned range, it is difficult to shape the carcass profile L into a natural equilibrium shape J under the standard inflated state Y. As a result, it is difficult to achieve object of the disclosure, i.e., uniforming the tension acting on the carcass 6 under the standard inflated state Y, and improving steering stability by increasing tire rigidity, especially lateral rigidity.

The above-mentioned range of the angle θ is relatively greater than those of conventional pneumatic tires, and therefore the bead apex rubbers 8 of the tire 1 according to the embodiment slant largely with respect to the tire radial direction. Thus, lateral rigidity of the pneumatic tire 1 is increased such that deformation thereof hardly occurs upon receiving lateral force, resulting in improving steering stability further.

In order to further improve the above advantageous effect, in each of the bead portions 4, when the bead apex rubber 8 is divided into an axially inner region 8i and an axially outer region 8o by the bead reference line N, a ratio Si/So of an area Si of the inner region 8i to an area So of the outer region 8o is preferably in a range of from 1.5 to 3.0. When the ratio Si/So is outside the above mentioned-range, it may be difficult to shape the carcass profile L into a natural equilibrium shape J under the standard inflated state Y, resulting in deteriorating steering stability due to reduction in rigidity, especially lateral rigidity, of the tire. In particular, the ratio Si/So exceeds 3.0, the area of the outer region 80 tends to be small, and thus it is hardly expected increases lateral rigidity of the tire even though the bead apex rubbers 8 slant.

Next, a method for manufacturing the pneumatic tire 1 (second disclosure) will be described.

The method for manufacturing includes designing (K1) a first tire profile F1, designing (K2) a second tire profile F2, designing (K3) a tire vulcanization mold 20, and vulcanizing (K4) a green tire.

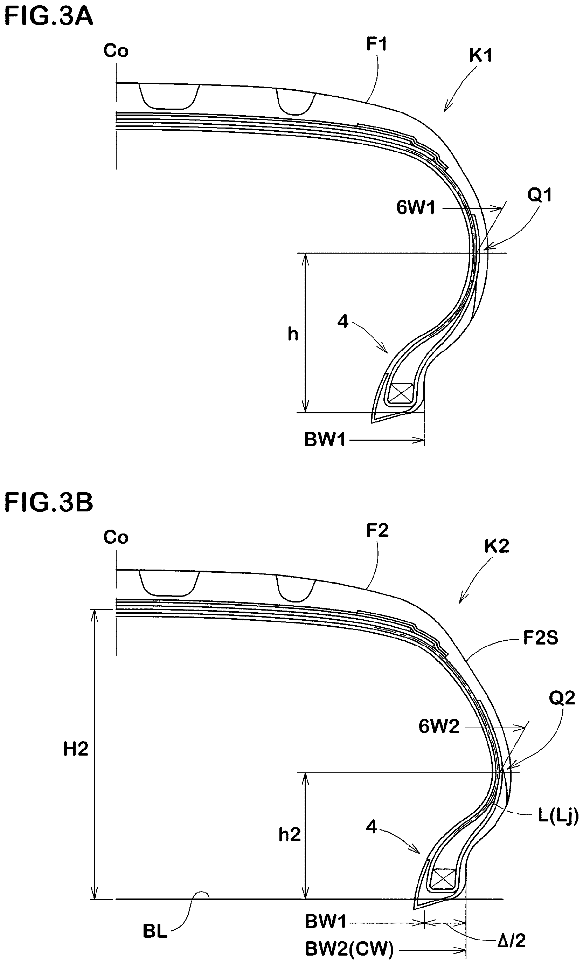

As illustrated in FIG. 3A, the first tire profile F1 is a tire profile such that the carcass profile L has a natural equilibrium shape J when the bead width, which is an axial distance between outside surfaces of the bead portions 4, is kept in a standard rim width RW. In the first profile F1, the bead width is represented by BW1. The first tire profile F1 is designed as a tire profile of the pneumatic tire 1 under the standard inflated state Y.

As illustrated in FIG. 3B, the second tire profile F2 is a tire profile that has a carcass profile deformed in an "otafuku" profile Lj by enlarging the bead width BW1 of the first tire profile greater than the standard rim width RW. Here, the "otafuku" profile Lj is a profile which swells axially in a radially inner location of the tire. In the second profile F2, the bead width is represented by BW2.

The differences between the first tire profile F1 and the second tire profile F2 are as follows: (1) the second tire profile F2 has a carcass maximum width position Q2 which is located lower than a carcass maximum width position Q1 of first tire profile F1; and (2) the second tire profile F2 has a carcass maximum width 6W2 which is wider than a carcass maximum width 6W1 of the first tire profile F1. With this, the second tire profile F2 has the carcass profile deformed in the "otafuku" profile Lj. The bead portions 4, as compared with the sidewall portions 3, have higher rigidity. Thus, when enlarging the bead width from BW1 to BW2, deformation of the tire tends to concentrate on the sidewall portions 3 due to less deformation of bead portions 4, resulting in the "otafuku" profile Lj.

Here, the bead width BW1 of the first tire profile F1 is the same as the standard rim width RW. On the other hand, the bead width BW2 of the second tire profile F2 which is wider than the standard rim width RW is employed as a clip width CW for the tire vulcanization mold 20. In the second tire profile F2, an increase ∆ of the bead width (=BW2-BW1) is preferably in a range of from 25 to 38 mm.

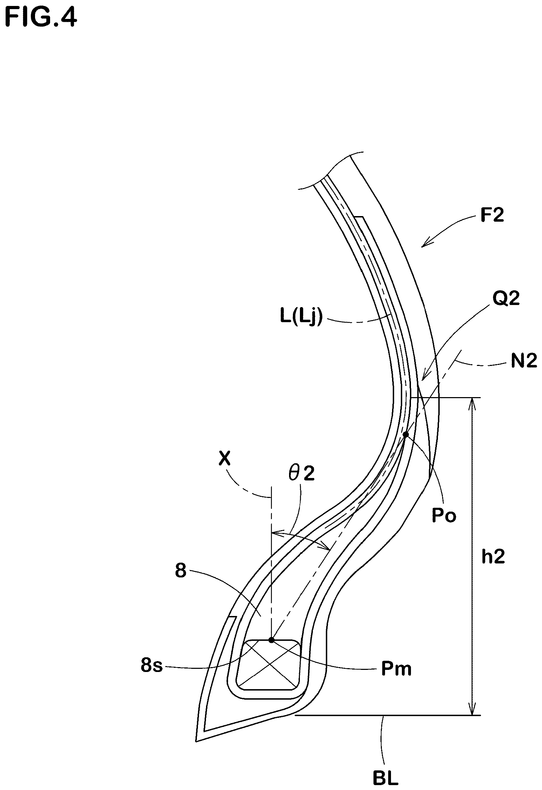

As illustrated in FIG. 4, in a tire meridian cross-section of the second tire profile F2, in each of the bead portions 4, an angle θ2 of a bead reference line N2 is preferably in a range of from 28 to 35 degrees with respect to the tire radial direction X. Here, the bead reference line N2 is the same as the bead reference line N under the standard inflated state Y as illustrated in FIG. 2. That is, the bead reference line N2 is defined as a straight line that passes the axially center point Pm of the inner surface 8s of the bead apex rubber 8 and the radially outer end Po of the bead apex rubber 8 in each bead portion 4 of the second tire profile F2.

Preferably, in the meridian tire cross-section of the second tire profile F2, a ratio h2/H2 of a carcass maximum-width height h2 from the bead base line BL to a carcass maximum height H2 (illustrated in FIG. 3B) is in a range of from 0.39 to 0.48.

When the angle θ2 is less than 28 degrees, it may be difficult to obtain the "otafuku" profile Lj which has a lower carcass maximum width position Q2. When the angle θ2 exceeds 35 degrees, it may be difficult to shape the carcass profile L in a constant cord path length. Thus, the above-mentioned range of the angle θ2 is set as a range to optimize the carcass profile L of the "otafuku" profile Lj within a certain cord path length condition.

When the ratio h2/H2 is less than 0.39, the carcass maximum-width height h2 becomes lower excessively, the carcass profile L tends to be bent largely around the bead portions 4. On the other hand, when the ratio h2/H2 exceeds 0.48, the carcass maximum-width height h2 becomes higher excessively, the carcass profile L tends to be bent largely around the buttress portions. Thus, the above-mentioned range of the ratio h2/H2 is also set as a range to optimize the carcass profile L of the "otafuku" profile Lj within a certain cord path length condition.

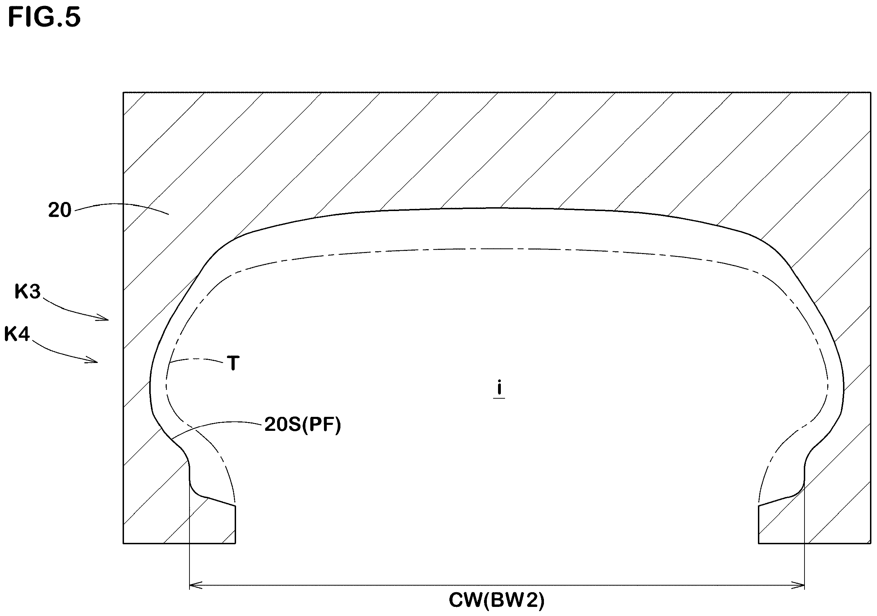

Next, as illustrated in FIG. 5, in the process (K3) of designing a tire molding cavity i of the tire vulcanization mold 20, a profile PF of the tire vulcanization mold 20 is designed based on the second tire profile F2. That is, the profile PF of a tire molding surface 20S (a surface of the tire molding cavity i) of the tire vulcanization mold 20 is designed in accordance with (e.g. so as to match) a profile of an outer surface F2S of the second tire profile F2 (illustrated in FIG.3B).

Further, in the process (K4), a green tire T is vulcanized using the tire vulcanization mold 20.

As described above, in the manufacturing method, the pneumatic tire 1 which is vulcanized and molded using the tire vulcanization mold 20 has the same profile as the second tire profile F2. That is, the pneumatic tire 1 is molded to have the bead width BW (i.e. the clip width CW) which is wider than the standard rim width RW. Thus, the pneumatic tire 1 can improve bead durability by suppressing occurrence of compressive strain in the bead portions upon being mounted on the standard rim while maintaining better rim assembling property (air-in performance).

Further, the pneumatic tire 1 under the standard inflated state Y where the tire 1 is mounted on the standard rim with the standard pressure return to a substantially same profile as the first tire profile F1. That is, in the standard inflated state Y, the carcass profile L of the pneumatic tire 1 is shaped into a substantially natural equilibrium shape J. Thus, in the standard inflated state Y, a uniform strain acts on the carcass 6, resulting in improving steering stability by increasing tire rigidity, especially the lateral rigidity, while suppressing increase in mass.

In particular, the bead portions 4 tend to have relatively higher rigidity than that of the sidewall portions 3. Thus, bead profiles of the pneumatic tire 1 hardly deform from bead profiles of the second tire profile F2 when the tire 1 turns to the standard inflated state Y. Therefore, the angle θ of the pneumatic tire 1 under the standard inflated state Y is substantially same as the angle θ2 of the second tire profile F2, i.e., which is in a range of from 28 to 35 degrees.

As described above, the above-mentioned angle range brings the effect not only optimizing the carcass profile L of the "otafuku" profile Lj within a certain cord path length condition but also the followings. That is, the above-mentioned angle range is relatively greater than those of conventional pneumatic tires, and thus the bead apex rubbers 8 relatively slant largely. As a result, lateral rigidity of the tire tends to high, improving steering stability further.

As illustrated in FIG. 1, in the tire meridian cross-section of the pneumatic tire 1 under the standard inflated state Y, in each of the pair of bead portions 4, a ratio h/H of the carcass maximum-width height h (mm) from the bead base line BL to the carcass maximum height H (mm) satisfies the following formula (1):

$$(-3.0 \times 10^{-4} \times W + 0.5863) <= (h / H) <= (-4.0 \times 10^{-4} \times W + 0.6520) \text{ --- (1),}$$

where "W" represents the tire nominal width (unit: mm).

When the ratio h/H falls outside the range defined by the formula (1), it may be difficult to shape the carcass profile into a natural equilibrium shape under the standard inflated state Y, resulting in deteriorating steering stability due to reduction in tire rigidity (especially, in the lateral rigidity).

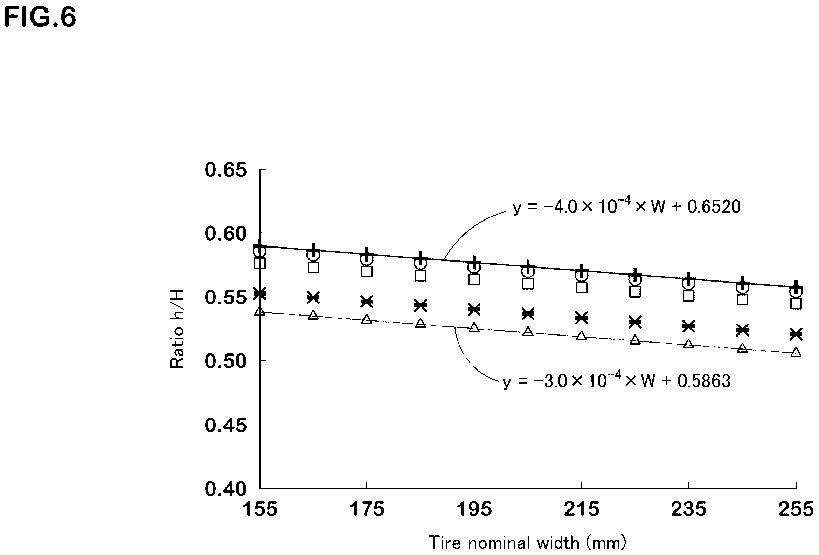

FIG. 6 is a graph showing the relationship between ratios h/H and tire nominal widths of various pneumatic tires which were manufactured based on the second disclosure while changing aspect ratios and the tire nominal widths W. By regression analysis for the upper limit data and the lower limit data of the graph, the following regression formulas (a) and (b) are obtained, respectively:

$$y = -4.0 \times 10^{-4} \times W + 0.6520 \text{ --- (a);}$$

and

$$y = -3.0 \times 10^{-4} \times W + 0.5863 \text{ --- (b).}$$

The pneumatic tires 1 which are manufactured using the above-mentioned method can satisfy the above formula (1) which defines a range between the regression formulas (a) and (b).

As illustrated in FIG. 1, in a tire meridian cross-section under the standard inflated state Y of the pneumatic tire 1, it is preferable that a tread radius R (unit: mm) satisfies the following formula (2):

$$(4.43 \times W - 386.7) <= R <= (4.43 \times W - 155.7) \text{ --- (2),}$$

where "W" represents the tire nominal width (unit: mm).

As used herein, the tread radius R shall mean a radius of the circular arc that passes a first point P1 and two second points P2 (one of the second points P2 is not illustrated), wherein the first point P1 is located on the tire equatorial plane Co of the tread ground contact surface 2S (i.e. the tread profile), and wherein the second points P2 are points on the tread ground contact surface 2S away from the tire equatorial plane Co to the axially both sides at a distance of 60% of a tread half width Tw/2.

When the tread radius R falls outside the range defined by the formula (2), it may be difficult to shape the carcass profile into a natural equilibrium shape under the standard inflated state Y, resulting in deteriorating steering stability due to reduction in tire rigidity (especially, in the lateral rigidity). Note that a thickness of the tread rubber 2G is a substantially constant within a crown region between the second points P2 and P2, thus a distance between the carcass profile and the tread ground contact surface 2S being also a substantially constant.

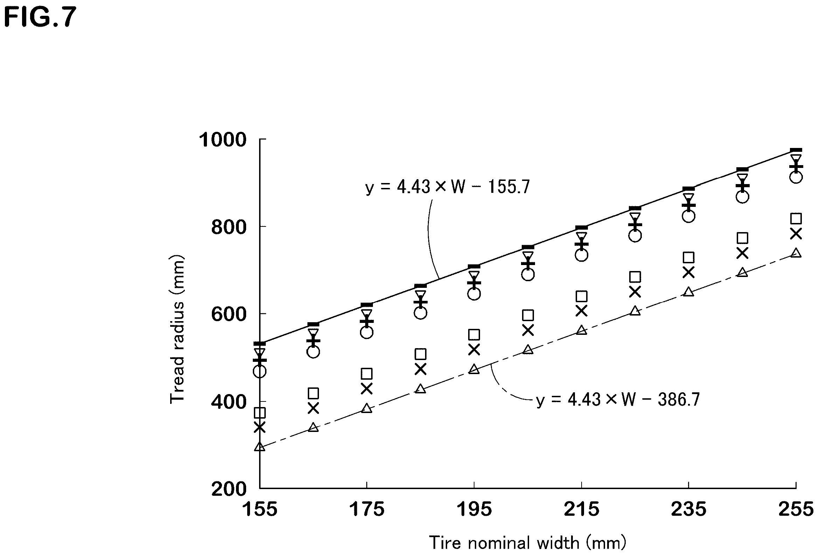

FIG. 7 is a graph showing the relationship between tread radii R and tire nominal widths W of various pneumatic tires which were manufactured based on the second disclosure while changing aspect ratios and the tire nominal widths W. By regression analysis for the upper limit data and the lower limit data of the graph, the following regression formulas (c) and (d) are obtained, respectively:

$$y = 4.43 \times W - 155.7 \text{ --- (c);}$$

and

$$y = 4.43 \times W - 386.7 \text{ --- (d).}$$

The pneumatic tires 1 which are manufactured using the above-mentioned method can satisfy the above formula (2) which defines a range between the regression formulas (c) and (d).

While the particularly preferable embodiments in accordance with the present disclosure have been described in detail, the present disclosure is not limited to the illustrated embodiments but can be modified and carried out in various aspects.

[Example]

Pneumatic tires 225/45R17 as shown in Table 1 were manufactured by way of trial based on the above-mentioned manufacturing method. Then, in each of the prototyped tires, the mass and lateral spring constant which corresponds to steering stability were measured. Note that the all prototyped tires had the same configuration except for the specification listed in Table 1.

As to the mass, the measurements are shown in Table 1 using an index of Ref. 1 being 100. The smaller value, the better.

As to the lateral spring constant, each prototyped tire was mounted on a standard rim 7.5J with an internal pressure of 230 kPa, and then an axial displacement of the tread center location when receiving lateral force of 0.5 kN was measured. Then, the lateral spring constant was calculated dividing the lateral force by the axial displacement. The test results are shown in Table 1 using a point score system (5: excellent, 1: unacceptable). The larger value indicates the greater lateral spring constant, i.e., better steering stability.

[Table 1]

|  | Ref. 1 | Ex. 1 | Ex. 2 | Ex. 3 | Ex. 4 | Ex. 5 | Ex. 6 | Ex. 7 |
|---|---|---|---|---|---|---|---|---|
| <Second tire profile > |  |  |  |  |  |  |  |  |
| Angle θ2 (deg.) | 31.5 | 31.5 | 31.5 | 31.5 | 31.5 | 28 | 35 | 31.5 |
| Ratio h2 /H2 | 0.58 | 0.435 | 0.435 | 0.39 | 0.48 | 0.435 | 0.435 | 0.435 |
| Difference Δ between standard rim width and clip width (mm) | 25 | 29 | 33 | 29 | 27 | 29 | 29 | 31.5 |
| <Standard inflated state> |  |  |  |  |  |  |  |  |
| Angle θ (deg.) | 28 | 30 | 32 | 31 | 28 | 29 | 29 | 31.5 |
| Area ratio Si/So of bead apex rubbers | 1.5 | 2.3 | 2.3 | 2.3 | 3.5 | 2.3 | 2.3 | 2.3 |
| Ratio h / H | 0.64 | 0.54 | 0.54 | 0.52 | 0.56 | 0.55 | 0.53 | 0.54 |
| Tread radius R (mm) | 850 | 730 | 850 | 730 | 730 | 730 | 900 | 730 |
| Tire mass | 100 | 99 | 100 | 99 | 99 | 98.5 | 102 | 99 |
| Lateral spring constant | 3 | 3.5 | 4 | 3.5 | 3.2 | 3.5 | 3.5 | 4 |

As shown in Table 1, it is confirmed that the example tires can improve steering stability while suppressing increase of mass.

## Claims

1. A pneumatic tire (1) comprising:

   a carcass (6) that comprises at least one carcass ply (6A) of cords extending between bead cores (5) of bead portions (4) through a tread portion (2) and sidewall portions (3), wherein both ends of the carcass ply (6A) are turned up around the respective bead cores (5); and
   a pair of bead apex rubbers (8) each extending radially outwardly to a radially outer end (Po) from a radially inner surface (8s) that is connected to the respective bead cores (5), wherein
   in a tire meridian cross-section under a standard inflated state in which the tire is mounted on a standard rim and inflated to a standard pressure, in each of the bead portions (4), an angle (θ) of a bead reference line (N) that passes an axially center point of the radially inner surface (8s) of the bead apex rubber (8) and the radially outer end (Po) of the bead apex rubber (8) is in a range of from 28 to 35 degrees with respect to a tire radial line, **characterized in that**
   in a tire meridian cross-section under the standard inflated state, in each of the bead portions (4), a ratio h/H of a carcass maximum-width height (h [mm]) from a bead base line (BL) to a carcass maximum height (H [mm]) from the bead base line (BL) satisfies the following formula (1):

   $$(-3.0 \times 10^{-4} \times W + 0.5863) <= (h/H) <= (-4.0 \times 10^{-4} \times W + 0.6520) \text{ --- (1),}$$

   where "W" represents a tire nominal width (unit: mm).

2. The pneumatic tire (1) according to claim 1, wherein

in a tire meridian cross-section under the standard inflated state, in each of the bead portions (4), when the bead apex rubber (8) is divided into an axially inner region (8i) and an axially outer region (8o) by the bead reference line (N), a ratio Si/So of an area Si of the inner region to an area So of the outer region is in a range of from 1.5 to 3.0.

3. The pneumatic tire (1) according to claim 1 or 2, wherein
in a tire meridian cross-section under the standard inflated state, a tread radius (R [mm]) that passes a first point (P1) of a tread profile on the tire equatorial plane (Co) and two second points (P2) of the tread profile which are located from tire equatorial plane (Co) to axially both sides at a distance of 60% of a tread half width satisfies the following formula (2):

$$(4.43 \times W\ [mm] - 386.7) <= R\ [mm] <= (4.43 \times W\ [mm] - 155.7) \text{ --- } (2),$$

where "W" represents a tire nominal width.

4. A method for manufacturing a pneumatic tire as claimed in any one of claims 1 to 3, the method comprising:

designing (K1) a first tire profile (F1) having a carcass profile (L) in a natural equilibrium shape when a bead width (BW1) of the bead portions (4) is kept in a standard rim width (RW);
designing (K2) a second tire profile (F2) by enlarging the bead width (BW1) of the first tire profile (F1) greater than the standard rim width (RW) such that the second tire profile (F2) has a carcass profile (Lj) deformed so as to have a lower maximum width position than that of the carcass profile (L) of first tire profile (F1);
designing (K3) a tire molding cavity of a tire vulcanization mold (20) based on the second tire profile (F2); and
vulcanizing (K4) a green tire using the tire vulcanization mold (20).

5. The method for manufacturing a pneumatic tire according to claim 4, wherein
in a tire meridian cross-section of the second tire profile (F2), each of the bead portions (4) of the second tire profile (F2) is designed such that the angle ($\theta$2) of the bead reference line (N, N2) is inclined at an angle in a range of from 28 to 35 degrees with respect to the tire radial line (X).

6. The method for manufacturing a pneumatic tire according to claim 4 or 5, wherein
in a tire meridian cross-section of the second tire profile (F2), each of the bead portions (4) of the second tire profile (F2) is designed such that a ratio h2/H2 of a carcass maximum-width height (h2) from the bead base line (BL) to a carcass maximum height (H2) from the bead base line (BL) is in a range of from 0.39 to 0.48.


**Patentansprüche**

1. Luftreifen (1), umfassend:

eine Karkasse (6), die mindestens eine Karkasslage (6A) aus Korden umfasst, die sich zwischen Wulstkernen (5) von Wulstabschnitten (4) durch einen Laufflächenabschnitt (2) und Seitenwandabschnitte (3) erstrecken, wobei beide Enden der Karkasslage (6A) um die jeweiligen Wulstkerne (5) herum umgeschlagen sind; und
ein Paar Wulstkernreitergummis (8), die sich jeweils von einer radial inneren Oberfläche (8s), die mit den jeweiligen Wulstkernen (5) verbunden ist, radial nach außen zu einem radial äußeren Ende (Po) erstrecken, wobei
in einem Reifenmeridianquerschnitt in einem standardmäßig aufgepumpten Zustand, in dem der Reifen auf eine Standardfelge aufgezogen und auf einen Standarddruck aufgepumpt ist, in jedem der Wulstabschnitte (4) ein Winkel ($\theta$) einer Wulstreferenzlinie (N), die durch einen axialen Mittelpunkt der radial inneren Oberfläche (8s) des Wulstkernreitergummis (8) und das radial äußere Ende (Po) des Wulstkernreitergummis (8) verläuft, in einem Bereich von 28 bis 35 Grad in Bezug auf eine Reifenradiallinie liegt, **dadurch gekennzeichnet, dass** in einem Reifenmeridianquerschnitt unter dem standardmäßig aufgepumpten Zustand in jedem der Wulstabschnitte (4) ein Verhältnis h/H einer Karkassenmaximalbreitenhöhe (h [mm]) von einer Wulstbasislinie (BL) zu einer Karkassenmaximalhöhe (H [mm]) von der Wulstbasislinie (BL) die folgende Formel (1) erfüllt:

$$(-3{,}0 \times 10^{-4} \times W + 0{,}5863) <= (h/H) <= (-4{,}0 \times 10^{-4} \times W + 0{,}6520) \text{ --- } (1),$$

wobei "W' für eine Reifen-Nennbreite (Einheit: mm) steht.

2. Luftreifen (1) nach Anspruch 1, wobei in einem Reifenmeridianquerschnitt unter dem standardmäßig aufgepumpten Zustand in jedem der Wulstabschnitte (4), wenn der Wulstkernreitergummi (8) durch die Wulstreferenzlinie (N) in einen axial inneren Bereich (8i) und einen axial äußeren Bereich (80) unterteilt ist, ein Verhältnis Si/So einer Fläche Si des inneren Bereichs zu einer Fläche So des äußeren Bereichs in einem Bereich von 1,5 bis 3,0 liegt.

3. Luftreifen (1) nach Anspruch 1 oder 2, wobei in einem Reifenmeridianquerschnitt unter dem standardmäßig aufgepumpten Zustand ein Laufflächenradius (R [mm]), der durch einen ersten Punkt (P1) eines Laufflächenprofils auf der Reifenäquatorialebene (Co) und zwei zweite Punkte (P2) des Laufflächenprofils, die von der Reifenäquatorialebene (Co) zu axial beiden Seiten in einem Abstand von 60% einer Laufflächenhalbbreite angeordnet sind, verläuft, die folgende Formel (2) erfüllt:

$$(4{,}43 \times W\,[\text{mm}] - 386{,}7) <= R\,[\text{mm}] <= (4{,}43 \times W\,[\text{mm}] - 155{,}7) \;\text{---}\;(2),$$

wobei "W' für eine Reifen-Nennbreite steht.

4. Verfahren zur Herstellung eines Luftreifens nach einem der Ansprüche 1 bis 3, wobei das Verfahren umfasst:

Entwerfen (K1) eines ersten Reifenprofils (F1) mit einem Karkassenprofil (L) in einer natürlichen Gleichgewichtsform, wenn eine Wulstbreite (BW1) der Wulstabschnitte (4) in einer Standardfelgenbreite (RW) gehalten wird;
Entwerfen (K2) eines zweiten Reifenprofils (F2) durch Vergrößern der Wulstbreite (BW1) des ersten Reifenprofils (F1) größer als die Standardfelgenbreite (RW), so dass das zweite Reifenprofil (F2) ein Karkassenprofil (Lj) aufweist, das so verformt ist, dass es eine niedrigere Position der maximalen Breite aufweist als das Karkassenprofil (L) des ersten Reifenprofils (F1);
Entwerfen (K3) einer Reifenformkavität einer Reifenvulkanisationsform (20) basierend auf dem zweiten Reifenprofil (F2); und
Vulkanisieren (K4) eines Rohreifens unter Verwendung der Reifenvulkanisationsform (20).

5. Verfahren zur Herstellung eines Luftreifens nach Anspruch 4, wobei in einem Reifenmeridianquerschnitt des zweiten Reifenprofils (F2) jeder der Wulstabschnitte (4) des zweiten Reifenprofils (F2) so gestaltet ist, dass der Winkel (θ2) der Wulstreferenzlinie (N, N2) in einem Winkel in einem Bereich von 28 bis 35 Grad gegenüber der Reifenradiallinie (X) geneigt ist.

6. Verfahren zur Herstellung eines Luftreifens nach Anspruch 4 oder 5, wobei in einem Reifenmeridianquerschnitt des zweiten Reifenprofils (F2) jeder der Wulstabschnitte (4) des zweiten Reifenprofils (F2) so gestaltet ist, dass ein Verhältnis h2/H2 einer Karkassenmaximalbreitenhöhe (h2) von der Wulstbasislinie (BL) zu einer Karkassenmaximalhöhe (H2) von der Wulstbasislinie (BL) in einem Bereich von 0,39 bis 0,48 liegt.

**Revendications**

1. Bandage pneumatique (1) comprenant :

une carcasse (6) qui comprend au moins une nappe de carcasse (6A) de câblés s'étendant entre des âmes de talon (5) de portions formant talon (4) à travers une portion formant bande de roulement (2) et des portions formant parois latérales (3), dans lequel les deux extrémités de la nappe de carcasse (6A) sont retroussées autour des âmes de talon respectives (5) ; et
une paire de caoutchoucs de sommet de talon (8) s'étendant chacun radialement vers l'extérieur jusqu'à une extrémité radialement extérieure (Po) depuis une surface radialement intérieure (8s) qui est connectée aux âmes de talon respectives (5), dans lequel
dans une section transversale méridienne du pneumatique dans un état gonflé standard, dans lequel le pneumatique est monté sur une jante standard et est gonflé à une pression standard, dans chacune des portions formant talon (4), un angle (θ) d'une ligne de référence de talon (N) qui passe par un point axialement central de la surface radialement intérieure (8s) du caoutchouc de sommet de talon (8) et de l'extrémité radialement extérieure (Po) du caoutchouc de sommet de talon (8) est dans une plage allant de 28 à 35 degrés par rapport à une ligne radiale du pneumatique,

**caractérisé en ce que**

dans une section transversale méridienne du pneumatique dans l'état gonflé standard, dans chacune des portions formant talon (4), un rapport h/H d'une hauteur de largeur maximum de carcasse (h [mm]) depuis une ligne de base de talon (BL) jusqu'à une hauteur maximum de carcasse (H [mm]) depuis la ligne de base de talon (BL) satisfait la formule suivante (1) :

$$(-3,0 \times 10^{-4}) \times W + 0,5863) <= (h/H) <= (-4,0 \times 10^{-4} \times W + 0,6520) \quad (1),$$

où « W » représente une largeur nominale du pneumatique (unité : mm).

2. Bandage pneumatique (1) selon la revendication 1, dans lequel
dans une section transversale méridienne du pneumatique dans l'état gonflé standard, dans chacune des portions formant talon (4), quand le caoutchouc de sommet de talon (8) est divisé en une région axialement intérieure (8i) et une région axialement extérieure (80) par la ligne de référence de talon (N), un rapport Si/So d'une aire Si de la région intérieure sur une aire So de la région extérieure est dans une plage allant de 1,5 à 3,0.

3. Bandage pneumatique (1) selon la revendication 1 ou 2, dans lequel dans une section transversale méridienne du pneumatique dans l'état gonflé standard, un rayon de bande de roulement (R [mm]) qui passe par un premier point (P1) d'un profil de bande de roulement sur le plan équatorial du pneumatique (Co) et deux seconds points (P2) du profil de bande de roulement qui sont situés depuis un plan équatorial du pneumatique (Co) jusqu'aux deux côtés, axialement, à une distance de 60 % d'une mi-largeur de bande de roulement satisfait la formule suivante (2) :

$$(4,43 \times W \, [mm] - 386,7) <= R \, [mm] <= (4,43 \times W \, [mm] - 155,7) \quad (2),$$

où « W » représente une largeur nominale du pneumatique.

4. Procédé pour fabriquer un bandage pneumatique selon l'une quelconque des revendications 1 à 3, le procédé comprenant les étapes consistant à :

concevoir (K1) un premier profil de pneumatique (F1) ayant un profil (L) de carcasse dans une forme d'équilibre naturel quand une largeur de talon (BW1) des portions formant talon (4) est maintenue dans une largeur de jante standard (RW) ;
concevoir (K2) un second profil de pneumatique (F2) en agrandissant la largeur de talon (BW1) du premier profil de pneumatique (F1) de manière à ce qu'elle soit plus grande que la largeur de jante standard (RW) de sorte que le second profil de pneumatique (F2) a un profil (Lj) de carcasse déformé de manière à avoir une position de largeur maximum inférieure à celle du profil (L) de carcasse du premier profil de pneumatique (F1) ;
concevoir (K3) une cavité de moulage de pneumatique d'un moule de vulcanisation de pneumatique (20) sur la base du second profil de pneumatique (F2) ; et
vulcaniser (K4) un pneumatique vert en utilisant le moule de vulcanisation de pneumatique (20).

5. Procédé pour fabriquer un bandage pneumatique selon la revendication 4, dans lequel
dans une section transversale méridienne du pneumatique du second profil de pneumatique (F2), chacune des portions formant talon (4) du second profil de pneumatique (F2) est conçue de sorte que l'angle (θ2) de la ligne de référence de talon (N, N2) est incliné sous un angle dans une plage allant de 28 à 35 degrés par rapport à la ligne radiale du pneumatique (X).

6. Procédé pour fabriquer un bandage pneumatique selon la revendication 4 ou 5, dans lequel
dans une section transversale méridienne du pneumatique du second profil de pneumatique (F2), chacune des portions de talon (4) du second profil de pneumatique (F2) est conçue de sorte qu'un rapport h2/H2 d'une hauteur de largeur maximum de carcasse (h2) depuis la ligne de base de talon (BL) sur une hauteur maximum de carcasse (H2) depuis la ligne de base de talon (BL) est dans une plage allant de 0,39 à 0,48.

FIG.1

# FIG.2

## FIG.3A

## FIG.3B

# FIG.4

# FIG.5

20

K3

K4

T

20S(PF)

i

CW(BW2)

EP 3 482 974 B1

**FIG.6**

Figure: Plot of Ratio h/H (y-axis, 0.40 to 0.65) versus Tire nominal width (mm) (x-axis, 155 to 255). Trend lines shown: $y = -4.0 \times 10^{-4} \times W + 0.6520$ and $y = -3.0 \times 10^{-4} \times W + 0.5863$.

EP 3 482 974 B1

**FIG.7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017121875 A
- EP 0298673 A2
- US 2004065397 A1
- JP S62128804 A
- JP 2007106174 A